(19) Europäisches Patentamt
European Patent Office
Office européen des brevets

(11)     **EP 0 821 223 B1**

(12)           **EUROPÄISCHE PATENTSCHRIFT**

(45) Veröffentlichungstag und Bekanntmachung des
Hinweises auf die Patenterteilung:
**23.03.2011   Patentblatt 2011/12**

(51) Int Cl.:
***G01K 7/25*** *(2006.01)*

(21) Anmeldenummer: **97111423.6**

(22) Anmeldetag: **07.07.1997**

(54) **Schaltungsanordnung zur Messung der Temperatur eines temperaturabhängigen Widerstandes**

Circuit for measuring the temperature of a temperature dependant resistance

Montage pour mesurer la température d'une résistance dont la valeur dépend de la température

(84) Benannte Vertragsstaaten:
**AT CH DE LI SE**

(30) Priorität: **24.07.1996   CH 185096**

(43) Veröffentlichungstag der Anmeldung:
**28.01.1998   Patentblatt 1998/05**

(73) Patentinhaber: **QUNDIS GmbH**
**99974 Mühlhausen (DE)**

(72) Erfinder: **Leipold, Jörg**
**99974 Mühlhausen (DE)**

(74) Vertreter: **Liedtke, Markus et al**
**Liedtke & Partner**
**Patentanwälte**
**Elisabethstraße 10**
**99096 Erfurt (DE)**

(56) Entgegenhaltungen:
**EP-A- 0 128 283     EP-A- 0 271 827**
**US-A- 4 206 648**

**Beschreibung**

Die Erfindung betrifft eine Schaltungsanordnung zur Messung der Temperatur eines temperaturabhängigen Widerstandes der im Oberbegriff des Anspruchs 1 genannten Art.

Solche Schaltungsanordnungen eignen sich beispielsweise zur Messung eines Widerstandes mit einer stark nichtlinearen Kennlinie, insbesondere eines NTC-Widerstandes. Solche Widerstände werden oft in Heizkostenverteilern und/oder energiebewertenden Warmwasserzählern verwendet.

Eine Schaltungsanordnung der im Oberbegriff des Anspruchs 1 genannten Art ist aus der europäischen Patentschrift EP 271 827 bekannt. Auch aus der europäischen Patentanmeldung EP 128 283 ist eine solche Schaltungsanordnung bekannt.

Aus der US, 4206, 648 ist eine Schaltung zur Messung eines temperaturabhängigen Widerstandes bekannt. Zur Messung des Widerstandes sind zwei Kondensatoren vorgesehen, die durch den zu bestimmenden Widerstand über entsprechende Schalter aufgeladen werden. Die zur Aufladung eines oder beider Kondensatoren benötigte Zeit wird gemessen und anhand dieser wird der Widerstandswert bestimmt.

Der Erfindung liegt die Aufgabe zugrunde, eine Schaltungsanordnung zur Messung der Temperatur eines temperaturabhängigen Widerstandes vorzuschlagen, die im gesamten vorgegebenen Temperaturintervall eine Messung mit einem sehr geringen Fehler erlaubt.

Die genannte Aufgabe wird erfindungsgemäss gelöst durch die Merkmale des Anspruchs 1.

Nachfolgend wird ein Ausführungsbeispiel der Erfindung anhand der Zeichnung näher erläutert.

Es zeigen:

Fig. 1   eine Schaltungsanordnung zur Messung der Temperatur eines temperaturabhängigen Widerstandes und

Fig. 2   ein Temperaturdiagramm.

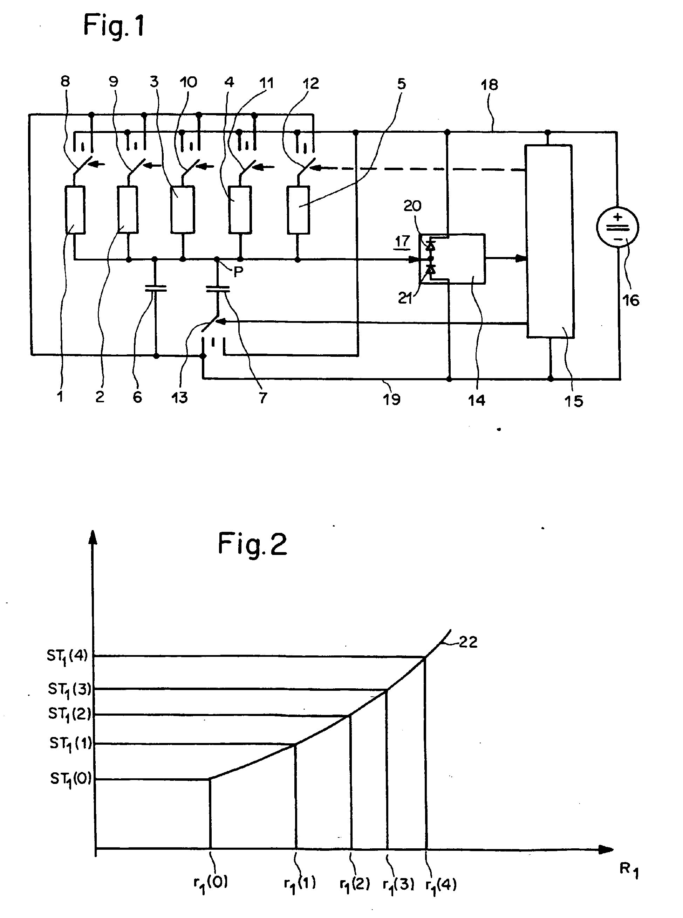

Die Fig. 1 zeigt eine Schaltungsanordnung zur Messung der Temperatur eines ersten und eines fakultativ vorhandenen zweiten temperaturabhängigen Widerstandes 1 bzw. 2. Die Schaltungsanordnung weist drei Referenzwiderstände 3 - 5, zwei Kondensatoren 6, 7, Schalter 8 - 13, einen Schwellwertschalter 14, einen Mikrokontroller 15 und eine Energiequelle 16 auf. Ein Anschluss jedes der Widerstände 1 - 5 ist sowohl mit einem Anschluss des ersten Kondensators 6 wie mit einem Anschluss des zweiten Kondensators 7 und mit dem Eingang 17 des Schwellwertschalters 14 verbunden. Der zweite Anschluss jedes der Widerstände 1 - 5 ist über einen zugeordneten Schalter 8 - 12 an eine Leitung 18 mit hohem Potential H oder an eine Leitung 19 mit tiefem Potential L anschliessbar oder hochohmig legbar. In der Zeichnung führt die Leitung 18 das Potential der Betriebsspannung, die Leitung 19 liegt auf Masse m. Der zweite Anschluss des ersten Kondensators 6 ist direkt mit der Leitung 19 verbunden. Der zweite Anschluss des zweiten Kondensators 7 ist über den Schalter 13 mit der Leitung 18 mit hohem Potential H oder mit der Leitung 19 mit tiefem Potential L verbindbar oder hochohmig legbar. Die Schalter 8 - 13 und der Schwellwertmelder 14 sind, im Gegensatz zur Darstellung in der Zeichnung, mit Vorteil direkt im Mikrokontroller 15 integriert. Als Energiequelle 16 dient in der Regel eine Batterie, insbesondere eine Lithiumbatterie. Der Schwellwertmelder 14 und der Mikrokontroller 15 sind von der Energiequelle 16 gespeist. Der Mikrokontroller 15 steuert die Stellung der Schalter 8 - 13. Der Schwellwertmelder 14 demzufolge über entsprechend geschaltete Schutzdioden 20 und 21 mit der Speisespannung der Batterie 16, d.h. mit dem Potential H bzw. dem Potential L verbunden.

Der Wert der Widerstände 1 - 5 wird entweder mittels des Kondensators 6 allein oder mittels beider, parallel geschalteter Kondensatoren 6 und 7 gemessen.

Der Wert eines beliebigen der Widerstände 1 - 5 wird mittels des Kondensators 6 allein gemessen, indem zu Beginn alle Schalter 8 - 13 mit der Leitung 18 mit hohem Potential H verbunden werden. Damit wird erreicht, dass der erste Kondensator 6 aufgeladen wird, während der zweite Kondensator 7 keine Ladung erhält. Nach einer vorbestimmten Zeitdauer $\tau_1$ werden alle Schalter 8 - 13 hochohmig gelegt. Anschliessend wird der zu messende Widerstand $w_n$ mittels des entsprechenden Schalters mit der Leitung 19, d.h. mit der tiefes Potential L führenden Leitung 19 verbunden, so dass sich der erste Kondensator 6 über den Widerstand $W_n$ entlädt, und gleichzeitig eine Zeitmessung gestartet. Mit zunehmender Entladedauer sinkt die Spannung $U_s$ am Eingang 17 des Schwellwertmelders 14. Unterschreitet die Spannung $U_s$ eine vorbestimmte Schwellspannung $U_T$ des Schwellwertmelders 14, dann stoppt der Schwellwertmelder 14 die Zeitmessung. Der Wert des Widerstandes $W_n$ wird auf diese Weise in eine Zeitspanne $t_{n,1}$ transformiert.

Der Wert eines beliebigen der Widerstände 1 - 5 wird mittels beider Kondensatoren 6 und 7 gemessen, indem zu Beginn die Schalter 8 - 12 mit der Leitung 18 mit dem hohen Potential H verbunden werden, während der Schalter 13 mit der Leitung 19 mit dem tiefen Potential L verbunden wird. Damit wird erreicht, dass beide Kondensatoren 6 und 7 aufgeladen werden. Nach einer vorbestimmten Zeitdauer $\tau_2$ werden die Schalter 8 - 12 hochohmig gelegt, während der Schalter 13 auf tiefem Potential L bleibt. Anschliessend wird der zu messende Widerstand $w_n$ mittels des entsprechenden Schalters mit der Leitung 19 verbunden, so dass sich nun beide Kondensatoren 6 und 7 über den Widerstand $w_n$ entladen. Der Wert des Widerstandes $w_n$ wird auf diese Weise in eine Zeitspanne $t_{n,2}$ transformiert.

Die drei Referenzwiderstände 3 - 5 legen zwei aneinander angrenzende Messbereiche M=1 und M=2 fest. Der Referenzwiderstand 3 bildet die untere Grenze des ersten Messbereiches. Der Referenzwiderstand 4 bildet die obere Grenze des ersten Messbereiches und gleichzeitig die untere Grenze des zweiten Messbereiches. Der Referenzwiderstand 5 bildet die obere Grenze des zweiten Messbereiches. Im ersten Messbereich erfolgt die Ermittlung der Temperatur des temperaturabhängigen Widerstandes 1 (oder 2), wie vorhin beschrieben, mittels des Kondensators 6 allein. Im zweiten Messbereich erfolgt sie mittels beider Kondensatoren 6 und 7. Die Widerstände 1 und gegebenenfalls 2 sind NTC-Widerstände, also Widerstände mit einem negativen Temperaturkoeffizienten. Deshalb ist der Referenzwiderstand 3 grösser als der Referenzwiderstand 4 und dieser wiederum grösser als der Referenzwiderstand 5 zu wählen.

Die Ermittlung der Temperatur des temperaturabhängigen Widerstandes 1 beginnt mit der Bestimmung der Zeitspanne $t_{4,M=1}$. Das ist die Zeit, die benötigt wird, um den ersten Kondensator 6 über den Referenzwiderstand 4 zu entladen. Dann wird die Zeitspanne $t_{1,1}$ gemessen: Das ist die Zeit, die benötigt wird, um den ersten Kondensator 6 über den Widerstand 1 zu entladen. Ist $t_{1,1} \geq t_{4,1}$, dann wird noch die Zeitspanne $t_{3,1}$ gemessen: Das ist die Zeit, die benötigt wird, um den ersten Kondensator 6 über den Referenzwiderstand 3 zu entladen. Anschliessend wird ein relativer Widerstand $R_{M=1}$ bestimmt gemäss der Gleichung:

$$R_{M=1} = \frac{t_{1,1} - t_{4,1}}{t_{3,1} - t_{4,1}} \tag{1}$$

Ist jedoch $t_{1,1} < t_{4,1}$, dann werden nacheinander die Zeiten $t_{4,M=2}$, $t_{5,2}$ und $t_{1,2}$ gemessen und ein relativer Widerstand $R_{M=2}$ bestimmt gemäss

$$R_{M=2} = \frac{t_{1,2} - t_{5,2}}{t_{4,2} - t_{5,2}} \tag{2}$$

Der relative Widerstand $R_M$ ist ein Verhältnis ohne Masseinheit. Falls der Wert $R_M$ kleiner als null ist, wird der Wert $R_M$ gleich null gesetzt. Falls der Wert $R_M$ grösser als eins ist, wird der Wert $R_M$ gleich eins gesetzt. Jeder Wert $R_M$ liegt somit in einem Intervall $W_1$ bzw. $W_2$ zwischen den Zahlen null und eins.

Die Messung des temperaturabhängigen Widerstandes 1 erfolgt somit immer in demjenigen Messbereich M=1 oder M=2, innerhalb dem sein Wert tatsächlich liegt.

Die Messzeit zur Bestimmung einer der vorgenannten Zeitspannen beträgt im Maximum etwa 0.1 Sekunden. Zwischen zwei aufeinanderfolgenden Messungen wird eine Wartezeit $t_w$ von etwa 0.4 Sekunden eingehalten, während der entweder der Kondensator 6 allein oder beide Kondensatoren 6 und 7 aufgeladen werden. Der Mikrokontroller, der die Schalter 8 - 13 steuert, bestimmt unmittelbar nach jeder Einzelmessung, ob die nächste Messung mit dem Kondensator 6 allein oder mit beiden Kondensatoren 6 und 7 durchzuführen ist und steuert dementsprechend den Schalter 13. Die gesamte Messzeit zur Bestimmung der Temperatur des temperaturabhängigen Widerstandes 1 oder 2 dauert somit zwischen 1.1 und 1.6 Sekunden.

Während der vorgesehenen Wartezeit $t_w$ von 0.4 Sekunden wird entweder der Kondensator 6 allein oder werden beide Kondensatoren 6 und 7 aufgeladen. Damit die Batterie 16 eine möglichst lange Lebensdauer hat, ist es wünschbar, den Ladestrom möglichst klein zu halten. Es muss jedoch gewährleistet sein, dass die Wartezeit $t_w$ wenigstens das 5 bis 10-fache der Zeitkonstante $R_p \cdot C$ beträgt, wobei $R_p$ den ohmschen Wert der beim Aufladen parallel geschalteten Widerstände und C die Kapazität des Kondensators 6 bzw. beider parallel geschalteten Kondensatoren 6 und 7 bezeichnen. Der Ladestrom kann verringert werden, indem während der Wartezeit $t_w$ nicht alle Widerstände 1 - 5, sondern nur soviele der Widerstände 1 - 5 mit der Leitung 18 verbunden sind, dass gilt $t_w > 5 \cdot R_p \cdot C$. Der Mikrokontroller 15 ist deshalb dahingehend programmiert, dass er die Schalter 8 - 12 so steuert, dass der Ladevorgang bei möglichst kleinem Strom erfolgt. Da der Ladestrom zu Beginn am grössten ist, schaltet der Mikrokontroller 15 die

Widerstände 1-5 entsprechend ihrem Wert nach einem vorbestimmten Zeitprogramm einzeln zu oder weg.

Beim Entladen wird die Zeitspanne gemessen, bei der die Spannung über dem Kondensator 6 bzw. über den parallel geschalteten Kondensatoren 6 und 7 die vorbestimmte Schwellspannung $U_T$ unterschreitet. Unmittelbar nach dem Ende der Zeitmessung befinden sich somit noch Ladungsträger auf den Kondensatoren 6 und 7. Sofern ein Wechsel des Messbereiches M, d.h. ein Umschalten des einen Anschlusses des Kondensators 7 erforderlich ist, erfolgt der Wechsel der Stellung des Schalters 13 mit Vorteil erst nach der annähernd vollständigen Entladung des Kondensators 6 bzw. der Kondensatoren 6 und 7, wie die nachfolgenden Ausführungen belegen.

3

Würde nämlich unmittelbar nach einer Zeitmessung, bei der die beiden Kondensatoren 6 und 7 parallel geschaltet sind, der Kondensator 7 mittels des Schalters 13 vom Potential L auf das Potential H gelegt, dann wäre die Spannung am Punkt P um die Schwellspannung $U_T$ grösser als das Potential H der Betriebsspannung. Dies würde dazu führen, dass ein Stromstoss durch die Schutzdiode 20 des Schwellwertmelders 14 flösse, bis die Spannung am Punkt P gleich dem Potential H wäre. Es ist deshalb bevorzugt vorgesehen, den Schalter 13 nicht unmittelbar nach der Zeitmessung, sondern um eine Zeitspanne $\tau$ verzögert zu schalten, so dass die Kondensatoren 6 und 7 nach dem Ende der Zeitmessung soweit entladen werden, dass das Umschalten des Schalters 13 keinen merklichen Stromstoss durch die Schutzdiode 20 zur Folge hat. Zur Beschleunigung der Entladung können die anderen Widerstände zugeschaltet werden.

Würde im umgekehrten Fall unmittelbar nach einer Zeitmessung mit dem Kondensator 6 allein der Kondensator 7 mittels des Schalters 13 vom Potential H auf das Potential L gelegt, dann flösse ein Ausgleichsstrom durch den Schalter 13, bis sich die Ladungen auf den beiden Kondensatoren 6 und 7 den neuen Spannungsverhältnissen angepasst hätten. Ein solcher Ausgleichsstrom kann wiederum verhindert oder wenigstens beschränkt werden, indem der Kondensator 6 vor dem Schalten des Schalters 13 annähernd vollständig entladen wird.

Die Berechnung der dem relativen Widerstand $R_{M=1}$ bzw. $R_{M=2}$ entsprechenden Temperatur T erfolgt vorteilhaft mit dem nachfolgend beschriebenen Verfahren. Das dem Messbereich M=1 zugeordnete Intervall $W_1$ ist, wie aus der Fig. 2 ersichtlich ist, in eine vorbestimmte Anzahl von k, nicht äquidistanten Teilbereichen unterteilt. Die Endpunkte des mit dem Index i bezeichneten Teilbereiches sind mit $r_{M=1}(i-1)$ und $r_{M=1}(i)$ bezeichnet. Der Endpunkt $r_{M=1}(0)$ hat den Wert 0, der Endpunkt: $r_{M=1}(k)$ hat den Wert 1, da das Intervall $W_1$ Werte von 0 bis 1 beinhaltet. Jedem Wert $r_{M=1}(i)$ ist ein Stützstellenwert $ST_{M=1}(i)$ zugeordnet. Die Stützstellenwerte $ST_M(i)$ liegen auf der Kennlinie 22 des zu messenden Widerstandes 1 bzw. 2. Im Beispiel sind k=4 Teilbereiche gewählt. In analoger Weise ist das dem Messbereich M=2 zugeordnete Intervall $W_2$ in h Teilbereiche unterteilt, die durch Endpunkte $r_{M=2}(j)$ und Stützstellenwerte $ST_{M=2}(j)$ charakterisiert sind, wobei der Index j die Werte von 0 bis h durchläuft.

Vorteilhaft sind die Distanzen der k (bzw. h) Teilbereiche gemäss Potenzen der Zahl 2 derart festgelegt, dass der zweite Teilbereich halb so gross ist wie der erste, der dritte halb so gross wie der zweite usw. und schliesslich der (k-1)-te halb so gross wie der (k-2)-te. Der letzte Teilbereich k jedoch ist gleich gross wie der zweitletzte Teilbereich (k-1).

Die Berechnung der Temperatur T des Widerstandes 1 (Fig. 1) erfolgt nun in drei Schritten, wobei aufgrund der Messung des relativen Widerstandes $R_1$ bzw. $R_2$ bereits klar ist, ob die Messung innerhalb des ersten Messbereiches M=1 oder innerhalb des zweiten Messbereiches M=2 erfolgte.

Zuerst wird der Index i so bestimmt, dass gilt

$$r_M(i) \leq R_M < r_M(i+1) \qquad (3)$$

Dann wird die Grösse rt bestimmt zu

$$rt = \frac{R_M - r(i)}{r(i+1) - r(i)} \qquad (4)$$

Dann wird die Temperatur T berechnet zu

$$T = ST_M(i) + \left[ST_M(i+1) - ST_M(i)\right] * rt + \left[ST_M(i+1) - ST_M(i)\right]^2 * \frac{(rt^2 - rt)}{n_M}, \qquad (5)$$

wobei die Grösse $n_M$ eine vom Messbereich M=1 oder M=2 abhängige Konstante ist.

Die Temperatur T kann dank diesem Mess- und Berechnungsverfahren mit sehr hoher Genauigkeit bestimmt werden. Das Berechnungsverfahren verwendet keine Exponentialfunktionen und ist deshalb im Mikrokontroller 15 (Fig. 1) mit geringem Aufwand implementierbar.

Im gezeigten Ausführungsbeispiel erfolgt die Zeitmessung beim Entladen der Kondensatoren 6 bzw. 6 und 7 (Fig. 1). Die Messung des Entladevorganges bietet den Vorteil, dass die von der Batterie 16 gelieferte Betriebsspannung über den Zeitaum der Zeitmessung nicht konstant sein muss. Damit jedoch die Kondensatoren 6 bzw. 6 und 7 zu Beginn jeder der drei bis fünf Einzelmessungen, die zur Bestimmung des relativen Widerstandes $R_{M=1}$ oder $R_{M=2}$ nötig sind, auf den gleichen Wert aufgeladen sind, wird nach dem Aufladen der Kondensatoren 6 bzw. 6 und 7 der Mikrokontroller

vorzugsweise für typisch einige Hundert Mikrosekunden beschäftigt. Dadurch wird erreicht, dass die Belastung der Batterie 16 und damit die Ladespannung an den Kondensatoren 6 bzw. 6 und 7 vor jeder Einzelmessung gleich sind.

Falls die Zeitmessung hingegen während des Aufladens der Kondensatoren 6 bzw. 6 und 7 erfolgen soll, dann muss dafür gesorgt werden, dass die Belastung der Batterie 16 während der gesamten Messzeit aller drei bis fünf Einzelmessungen konstant ist.

**Patentansprüche**

**1.** Schaltungsanordnung zur Messung der Temperatur T eines temperaturabhängigen Widerstandes (1; 2), mit der die Werte des Widerstandes (1; 2), sowie eines ersten (3) und eines zweiten Referenzwiderstandes (4) als Entladezeiten gemessen werden, indem ein erster Kondensator (6) aufgeladen und anschliessend durch Schalten entsprechender Schalter (8-11) über den Widerstand (1; 2) bzw. den ersten bzw. den zweiten Referenzwiderstand (3; 4) entladen wird, und bei dem aus den drei Entladezeiten ein relativer Widerstand und aus dem relativen Widerstand die Temperatur des temperaturabhängigen Widerstandes (1; 2) berechnet wird, **dadurch gekennzeichnet, dass** ein dritter, mittels eines weiteren Schalters A (12) schaltbarer Referenzwiderstand (5) vorgesehen ist, dass dem ersten Kondensator (6) mittels eines entsprechenden Schalters B (13) ein zweiter Kondensator (7) parallel zuschaltbar ist, und dass die mit dem ersten Kondensator (6) allein gemessenen Entladezeiten des Widerstandes (1; 2), des ersten und des zweiten Referenzwiderstandes (3; 4) zur Berechnung des relativen Widerstandes herangezogen werden, sofern die Entladezeit des Widerstandes (1; 2) grösser als die oder gleich der Entladezeit des zweiten Referenzwiderstandes (4) ist, dass andernfalls die mit dem ersten und dem zweiten Kondensator (6; 7) gemessenen Entladezeiten des Widerstandes (1; 2), des zweiten und des dritten Referenzwiderstandes (4; 5) zur Berechnung des relativen Widerstandes herangezogen werden und dass beim Wechsel von einer Messung, bei der beide Kondensatoren (6; 7) parallel geschaltet sind, zu einer Messung mit dem ersten Kondensator (6) allein das Schalten des Schalters B (13) erst erfolgt, nachdem die Kondensatoren (6; 7) annähernd entladen sind.

**2.** Schaltungsanordnung nach Anspruch 1, **dadurch gekennzeichnet, dass** beim Wechsel von einer Messung mit dem ersten Kondensator (6) allein zu einer Messung, bei der beide Kondensatoren (6; 7) parallel geschaltet sind, das Schalten des Schalters B (13) erst erfolgt, nachdem der erste Kondensator (6) annähernd entladen ist.

**3.** Schaltungsanordnung nach Anspruch 1 oder 2, **dadurch gekennzeichnet, dass** anstelle der Entladezeiten der Kondensatoren (6; 7) Aufladezeiten der Kondensatoren (6; 7) gemessen werden.

**Claims**

**1.** Circuit arrangement for measuring the temperature T of a temperature-dependent resistor (1; 2), which circuit arrangement is used to measure the values of the resistor (1; 2), and of a first (3) and a second reference resistor (4) in terms of discharge times by charging a first capacitor (6) and subsequently discharging it via the resistor (1; 2) or via the first or second reference resistor (3; 4) by switching corresponding switches (8-11), and in which the three discharge times are used to calculate a relative resistance and the relative resistance is used to calculate the temperature of the temperature-dependent resistor (1; 2), **characterized in that** one third reference resistor (5) switchable by one further switch A (12) is provided, that a second capacitor (7) is connectible in parallel to the first capacitor (6) using a corresponding switch B (13), and that the discharge times of the resistor (1; 2), of the first and second reference resistors (3, 4) measured with the first capacitor (6) alone are used for calculating the relative resistance where the discharge time of the resistor (1; 2) is higher than or equal to the discharge time of the second reference resistor (4), that, otherwise, the discharge times of the resistor (1; 2), of the second and of the third reference resistors (4; 5) measured with the first and second capacitors (6; 7) are used for calculating the relative resistance, and that, when shifting from one measurement in which the two capacitors (6; 7) are connected in parallel to a measurement with the first capacitor (6) alone, the switching of the switch B (13) does not take place unless after the capacitors (6; 7) have been approximately discharged.

**2.** Circuit arrangement as claimed in claim 1 **characterized in that**, when shifting from one measurement with the first capacitor (6) alone to a measurement in which the two capacitors (6; 7) are connected in parallel, the switching of the switch B (13) does not take place unless after the first capacitor (6) has been approximately discharged.

**3.** Circuit arrangement as claimed in claims 1 or 2 **characterized in that**, instead of the discharge times of the capacitors (6; 7), the charge times of the capacitors (6; 7) are measured.

**Revendications**

1. Circuit pour la mesure de la température T d'une résistance dépendante de la température (1 ; 2), au moyen duquel les valeurs de la résistance (1; 2), d'une première (3) et d'une deuxième résistance de référence (4) peuvent être mesurées sous forme de temps de décharge, par charge puis décharge d'un premier condensateur (6) en commutant des commutateurs correspondants (8-11) via la résistance (1; 2) ou la première, ou la deuxième résistance de référence (3 ; 4), où une résistance relative est calculée à partir des trois temps de décharge, et la température de la résistance dépendante de la température (1; 2) à partir de la résistance relative, **caractérisé en ce qu'**il est prévu une troisième résistance de référence (5), commutable au moyen d'un autre commutateur A (12), **en ce qu'**un un deuxième condensateur (7) est commutable parallèlement au premier condensateur (6) au moyen d'un commutateur B (13) correspondant, **en ce que** les temps de décharge de la résistance (1; 2), de la première et de la deuxième résistance de référence (3; 4) mesurés avec le premier condensateur (6) seulement, sont exploités pour le calcul de la résistance relative si le temps de décharge de la résistance (1; 2) est supérieur ou égal au temps de décharge de la deuxième résistance de référence (4), **en ce qu'**il est recouru sinon aux temps de décharge de la résistance (1; 2), de la deuxième et de la troisième résistance de référence (4; 5) mesurés avec le premier et le deuxième condensateur (6; 7) pour le calcul de la résistance relative, et **en ce qu'**en cas de passage d'une mesure où les deux condensateurs (6; 7) sont commutés en parallèle à une mesure avec le premier condensateur (6) seulement, la commutation du commutateur B (13) n'est réalisée qu'après que les condensateurs (6; 7) sont à peu près déchargés.

2. Circuit selon la revendication 1, **caractérisé en ce qu'**en cas de passage d'une mesure avec le premier condensateur (6) seulement à une mesure où les deux condensateurs (6; 7) sont commutés en parallèle, la commutation du commutateur B (13) n'est réalisée qu'après que le premier condensateur (6) est à peu près déchargé.

3. Circuit selon la revendication 1 ou la revendication 2, **caractérisé en ce que** des temps de charge des condensateurs (6; 7) sont mesurés au lieu des temps de décharge des condensateurs (6; 7).

# Fig.1

# Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 271827 A
- EP 128283 A

- US 4206648 A